# EUROPÄISCHE PATENTSCHRIFT

(11) **EP 3 527 460 B1**
(45) Veröffentlichungstag und Bekanntmachung des Hinweises auf die Patenterteilung: **15.09.2021**
(21) Anmeldenummer: 19154802.3
(22) Anmeldetag: 31.01.2019
(51) Int. Cl.: B62B 3/18, B62B 3/02, B62B 5/06

(54) **UNTERGESTELL FÜR EINEN TRANSPORTCONTAINER**
BASE FRAME FOR A TRANSPORT CONTAINER
CHÂSSIS DE BASE POUR UN CONTENEUR DE TRANSPORT

(30) Priorität: 15.02.2018 DE 102018103370; 19.02.2018 DE 102018103631
(43) Veröffentlichungstag der Anmeldung: 21.08.2019
(73) Patentinhaber: Wanzl GmbH & Co. KGaA, 89340 Leipheim (DE)
(72) Erfinder: Liebhaber, Helmut, 86480 Aletshausen (DE)

(56) Entgegenhaltungen:
- EP-A2- 0 048 135
- DE-B3-102006 034 888
- GB-A- 2 484 550
- US-B1- 6 203 035

## Beschreibung

Die vorliegende Erfindung betrifft ein fahrbares Untergestell für einen stapelbaren Transportcontainer sowie einen Transportcontainer.

Aus dem Stand der Technik sind bereits stapelbare Transportcontainer bekannt. Diese Transportcontainer werden im Zusammenhang mit dem Transport von Gütern im Logistikbereich eingesetzt.

Beispielsweise ist aus der DE 20 2012 010 154 U1 ein stapelbarer Transportcontainer bzw. Rollcontainer bekannt, der ein Z-förmiges bzw. N-förmiges Grundgestell aufweist. In Folge des Z-förmigen Grundgestells können im unbeladenen Zustand mehrere Rollcontainer ineinander eingeschoben und hierdurch gestapelt werden.

Aus der DE 201 08 397 U1 ist weiter ein stapelbarer Transportcontainer bekannt, der einen Z-förmigen Grundriss aufweisenden Rahmen und darauf aufgebaute Seitenwände aufweist. An dem Rahmen sind mehrere Rollen angeordnet, mittels derer der Transportcontainer verfahren werden kann. Auch hier ist es möglich, aufgrund des Z-förmigen Grundrisses des Rahmens mehrere Wagen ineinander zu schieben.

Aus der EP 3 081 453 A1 ist ein Rollcontainer mit klappbaren Seitenwänden bekannt. Dieser Rollcontainer weist ein U-förmiges Grundgestell auf, auf dem die Seitenwände und auch der Boden getragen sind.

Weiterhin ist aus der EP 0 048 135 A2 und der US 6 203 035 B1 jeweils ein fahrbares Untergestell für einen stapelbaren Transportcontainer bekannt. Es ist ein Grundrahmen vorgesehen, wobei am Grundrahmen Rollen befestigt sind. Der Grundrahmen weist hierbei einen W-förmigen Grundriss auf.

Die GB 2 484 550 A offenbart am unteren Ende der Rückwand einen Querträger. Dieser verbindet zwei Seitenwände und verleiht der Rückwand zusätzlich Stabilität. Es ist die Aufgabe der vorliegenden Erfindung, ein fahrbares Untergestell für einen stapelbaren Transportcontainer sowie einen stapelbaren Transportcontainer der eingangs genannten Art in vorteilhafter Weise weiterzubilden, insbesondere dahingehend, dass dieser gut stapelbar und zugleich aber auch mittels Flurförderfahrzeugen und Staplern besser und sicherer gehandhabt werden kann. Diese Aufgabe wird erfindungsgemäß gelöst durch ein fahrbares Untergestell für einen stapelbaren Transportcontainer mit den Merkmalen des Anspruchs 1. Danach ist vorgesehen, dass ein fahrbares Untergestell für einen stapelbaren Transportcontainer mit einem Grundrahmen und mit am Grundrahmen befestigten Rollen versehen ist, wobei der Grundrahmen einen W-förmigen Grundriss aufweist. Die Erfindung basiert auf dem Grundgedanken, dass durch die W-Form des Grundrisses des Grundrahmens weiterhin eine gute Stapelbarkeit, da Ineinanderschiebbarkeit mehrerer Untergestelle eines stapelbaren Transportcontainers ermöglicht ist. Gleichzeitig ermöglicht die W-Form eine stabile Grundstruktur des Grundrahmens, die auch beispielsweise durch Flurförderfahrzeuge und/oder Stapler gut aufgenommen werden kann. Außerdem erlaubt die W-Form, dass ein derartiger Wagen auch höhere Lasten aufnehmen kann, da insgesamt vergleichsweise mehr Streben zum Tragen eines Bodens zur Verfügung stehen, als dies beispielsweise bei einer Z-Form, N-Form oder V-Vorm oder U-Form der Fall ist. Die W-Form kann auch dadurch gebildet werden, dass beispielsweise zwei V-förmige Elemente nebeneinander angeordnet sind. Es ist nicht erforderlich, dass diese V-förmigen Elemente mit den offenen Enden des "V" direkt nebeneinander angeordnet sind. Beispielsweise können diese auch leicht beabstandet zueinander angeordnet sein.

Des Weiteren ist vorgesehen, dass die W-Form des Grundrahmens durch zwei Trapez-Elemente im Bereich der beiden Verbindungspunkte der Schenkel der W-Form ausgebildet wird. Durch Trapez-Elemente kann in diesem Bereich, der beispielsweise auch den offenen Bereich des fahrbaren Untergestells aufweisen kann, stabilisiert werden. Bei den Trapez-Elementen kann es sich um teilweise geöffnete Trapez-Elemente handeln. Denkbar ist beispielsweise, dass es sich bei den Trapez-Elementen auch um Hohlprofile oder dergleichen handelt.

Des Weiteren kann vorgesehen sein, dass die Schenkel der W-Form des Grundrahmens durch Rohrelemente, insbesondere Profilrohre wie Vierkantrohre ausgebildet sind. Dies ermöglicht einen einfachen Aufbau und gleichzeitig eine stabile Struktur. Durch die Verwendung von Rohrprofilen kann darüber hinaus vergleichsweise leichtbauend gearbeitet werden. Sofern es sich um Halbzeuge wie Vierkantrohre oder dergleichen handelt, kann auch auf Standardbauelemente zurückgegriffen werden, wodurch Kosten gesenkt werden können.

Die Rohrelemente können an den Trapez-Elementen befestigt sein. Insbesondere kann vorgesehen sein, dass die Rohrelemente an den Außenseiten der Trapez-Elemente befestigt sind. Hierdurch kann eine einfache und sichere Befestigung ermöglicht werden. Vorstellbar ist beispielsweise, die Rohrelemente an den im montierten Betrieb im horizontalen Bereich aufgestellten senkrechten Seitenwänden der Trapez-Elemente zu befestigen. Weiter denkbar ist eine Befestigung durch Verschraubung oder aber auch durch Verschweißen. Möglich ist auch, dass die Seitenwände der Rohrelemente zumindest teilweise Außenseiten der Trapez-Elemente ausbilden. In einem derartigen Fall wäre es möglich, die Trapezelemente beispielsweise nur durch zwei Flachblechstücke und Seitenwände der Vierkantrohre auszubilden.

Die Trapez-Elemente können zumindest teilweise kanalförmig ausgebildet sein. Durch eine derartige Ausbildung kann Material eingespart werden. Zugleich kann der Kanal auch für weitere Aufgaben und Funktionen verwendet werden.

Die Trapez-Elemente weisen wenigstens eine Offnung für eine Staplergabel auf. Insbesondere im Zusammenhang mit der Ausbildung kanalförmiger Trapez-Elemente ergibt sich hierdurch die Möglichkeit, einen Aufnahmekanal für beispielsweise eine Staplergabel oder die Gabel eines Flurförderfahrzeugs auszubilden. Dadurch wird eine sichere Aufnahmemöglichkeit für Flurförderfahrzeuge oder Staplerfahrzeuge oder Stapler erreicht, da diese durch die Aufnahme bzw. durch den Kanal hindurchstoßen können und somit sicher das Untergestell und damit auch den Transportcontainer aufnehmen und bewegen können.

Darüber hinaus kann vorgesehen sein, dass der Grundrahmen wenigstens einen Querträgeraufweist. Der Querträger kann beispielsweise auf der doppelt geöffneten Profilseite der W-Form angeordnet sein und hier die beiden offenen Enden entsprechend miteinander verbinden. Hierdurch wird dem gesamten Untergestell eine verbesserte Stabilität verliehen.

Der Querträger kann dabei auf der den Trapez-Elementen entgegengesetzten Seite des Grundrahmens angeordnet sein.

Auch der Querträger kann entsprechende Öffnungen für eine Staplergabel aufweisen. Die Öffnungen für die Staplergabel des Querträgers können dabei derart angeordnet sein im montierten Zustand, dass die Öffnungen des Grundrahmens, der Kanal des Trapez-Elements und die Öffnungen des Trapez-Elements für die Staplergabel entsprechend fluchten und insgesamt einen Aufnahmekanal für eine Staplergabel ausbilden.

In einer weiterführenden Ausführungsform kann der Querträger ein Bestandteil der Rückenwand sein, der an dem Grundrahmen ortsfest angeordnet ist.

Des Weiteren betrifft die vorliegende Erfindung einen stapelbaren Transportcontainer mit wenigstens einem fahrbaren Untergestell. Bei dem fahrbaren Untergestell handelt es sich um ein fahrbares Untergestell in den vorstehend vorgestellten möglichen Ausgestaltungen.

Insbesondere kann weiter vorgesehen sein, dass am Querträger des fahrbaren Untergestells ein Containerboden klappbar, insbesondere hochklappbar, befestigt ist.

In einer weiterführenden Ausführungsform kann der Containerboden an Befestigungsblechen drehbar gelagert sein.

So kann insgesamt die Stapelbarkeit und Zerlegbarkeit des Transportcontainers verbessert werden. Der Containerboden kann beispielsweise ein Gitterboden sein. Ein derartiger Gitterboden kann in üblicher Form einen umlaufenden Rahmen mit einem am Rahmen befestigten Traggitter aufweisen. Insbesondere kann es sich bei dem Gitterboden um eine Metallkonstruktion handeln.

Am Querträger kann weiter eine starre Rückwand befestigt sein. Diese kann im montierten Zustand starr vom Querträger aus aufragend befestigt sein. Bei der starren Rückwand kann es sich ebenfalls, wie auch beim Containerboden, um eine Gitterkonstruktion handeln.

Die starre Rückwand und der Querträger können identisch orientiert sein. Insbesondere ist darunter zu verstehen, dass der Querträger und die Rückwand identisch orientiert sind, wobei die Ausrichtung der Rückwand auch der Ausrichtung des Querträgers entspricht.

An der Rückwand kann ein Schiebegriff angeordnet sein. Dabei ist der Schiebegriff vorzugsweise auf der Seite der Rückwand angeordnet, die im montierten Zustand eine außenliegende Seite der Rückwand des Transportcontainers darstellt.

Denkbar kann insbesondere sein, dass der Schiebgriff klappbar ausbildet ist.

Durch einen derartigen Schiebegriff kann der Nutzer des Transportwagens diesen besser bewegen.

Durch die Klappbarkeit des Schiebegriffs wird es möglich, die Stapelbarkeit des Transportcontainers insgesamt zu erhöhen.

In einer weiterführenden Ausführungsform kann ein Zuggriff eingesetzt werden.

Darüber hinaus kann vorgesehen sein, dass am Querträger wenigstens eine verschwenkbar angeordnete Seitenwand angeordnet ist.

Denkbar ist aber auch, dass zwei verschwenkbare Seitenwände vorgesehen sind.

Die verschwenkbaren Seitenwände bzw. die eine verschwenkbare Seitenwand kann an einem Ende der Rückwand entsprechend angeordnet sein.

Die Seitenwände können derart voneinander beabstandet angeordnet sein, dass zwischen diesen im ausgeklappten Zustand der Containerboden hoch und auch herunter geklappt werden kann. Weiter ist denkbar, dass im aufgeklappten Zustand Containerboden, Seitenwand bzw. Rückwand jeweils einen 90°C Winkel miteinander einschließen.

Weitere Einzelheiten und Vorteile der Erfindung sollen nun anhand eines in den Zeichnungen dargestellten Ausführungsbeispiels näher erläutert werden.

Es zeigen:
- Fig. 1: perspektivische Darstellung eines Ausführungsbeispiels eines erfindungsgemäßen stapelbaren Transportcontainers sowie des erfindungsgemäßen Untergestells;
- Fig. 2: eine Draufsicht auf den Transportcontainer im zusammengeklappten Zustand gemäß Fig. 1;
- Fig. 3: eine Rückansicht auf den Transportcontainer im zusammengeklappten Zustand gemäß Fig. 1;
- Fig. 4: eine Seitenansicht auf den Transportcontainer gemäß Fig. 1;
- Fig. 5: eine Draufsicht auf den aufgeklappten Transportcontainer gemäß Fig. 1;
- Fig. 6: eine perspektivische Ansicht auf den Transportcontainer im aufgeklappten Zustand gemäß Fig. 1;
- Fig. 7: eine perspektivische Ansicht auf den aufgeklappten Transportcontainer gemäß Fig. 1 im Zusammenhang mit einem schematisch dargestellten Flurförderfahrzeug / Stapler;
- Fig. 8: eine Ansicht von unten auf den Transportcontainer aufgefädelt auf die Staplergabel eines Flurförderfahrzeugs (vgl. auch Fig. 7)
- Fig. 9: eine perspektivische Ansicht im zusammengeklappten Zustand auf eine weiterführende Ausführungsform eines Transportcontainers;
- Fig. 10: eine Seitenansicht des zusammengeklappten Transportcontainers;
- Fig. 11: eine Rückansicht auf zusammengeklappten Transportcontainers;
- Fig. 12: eine Rückwand des Transportcontainers in der weiterführenden Ausführungsform.

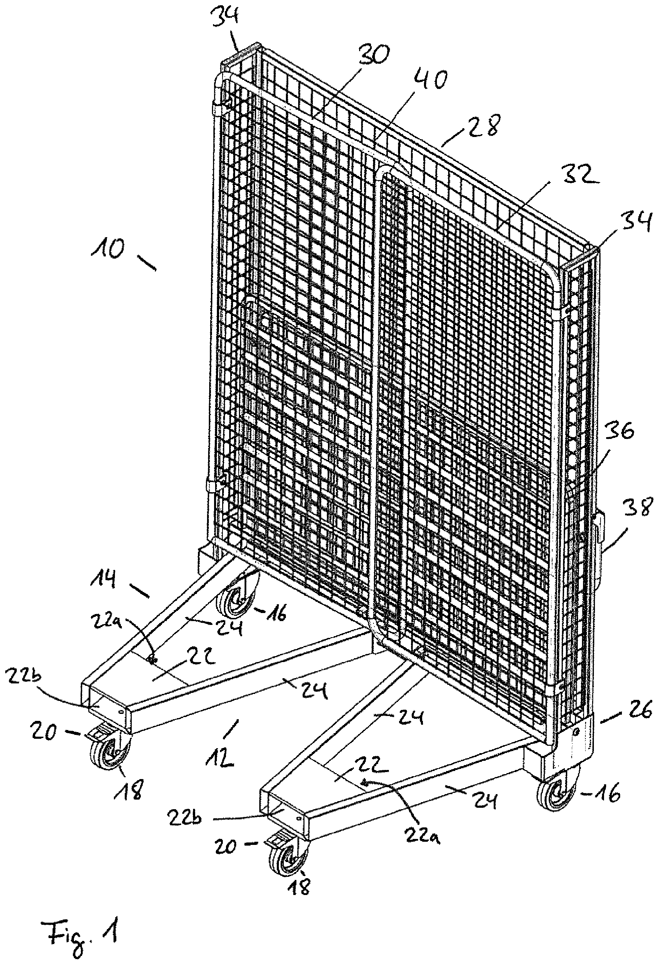

**Fig. 1** zeigt in perspektivischer Darstellung ein erfindungsgemäßes Ausführungsbeispiel eines stapelbaren Transportcontainers 10 mit einem erfindungsgemäßen fahrbaren Untergestell 12.

Der stapelbare Transportcontainer 10 ist dabei im zusammengeklappten Zustand gezeigt.

Das Untergestell 12 des stapelbaren Transportcontainers 10 weist dabei einen Grundrahmen 14 und mehrere am Grundrahmen 14 befestigte Rollen 16 und 18 auf. Die Rollen 16 können beispielsweise als Bockrollen ausgebildet sein.

Die Rollen 18 können als schwenkbare bzw. drehbare Rollen ausgebildet sein.

Die Rollen 18 sind dabei auch mittels entsprechender Bremsen 20 festlegbar.

Wie bereits in Fig. 1 ersichtlich ist, ist der Grundrahmen 14 mit einem W-förmigen Grundriss ausgestattet.

Dabei wird die W-Form des Grundrahmens 14 durch zwei Trapez-Elemente 22 ausgebildet.

Die Trapez-Elemente 22 sind dabei identisch ausgebildet.

Die Trapez-Elemente 22 sind dabei im Bereich der beiden Verbindungspunkte der Schenkel der W-Form ausgebildet.

Die Schenkel der W-Form werden durch Rohrelemente 24 gebildet.

Bei den Rohrelementen 24 handelt es sich um Vierkantrohre.

Die Vierkantrohre 24 sind dabei jeweils bei jedem V-Element der W-Form des Untergestelles gleichmäßig und identisch an den beiden Trapez-Elementen 22 ausgebildet, so dass sich insgesamt eine symmetrische Ausgestaltung der W-Form ergibt.

Die Rohrelemente 24 sind dabei an den Trapez-Elementen 22 entsprechend ausgebildet.

Wie weiter ersichtlich ist, sind die Trapez-Elemente 22 kanalförmig ausgebildet und weisen jeweils eine Öffnung 22a und eine Öffnung 22b auf.

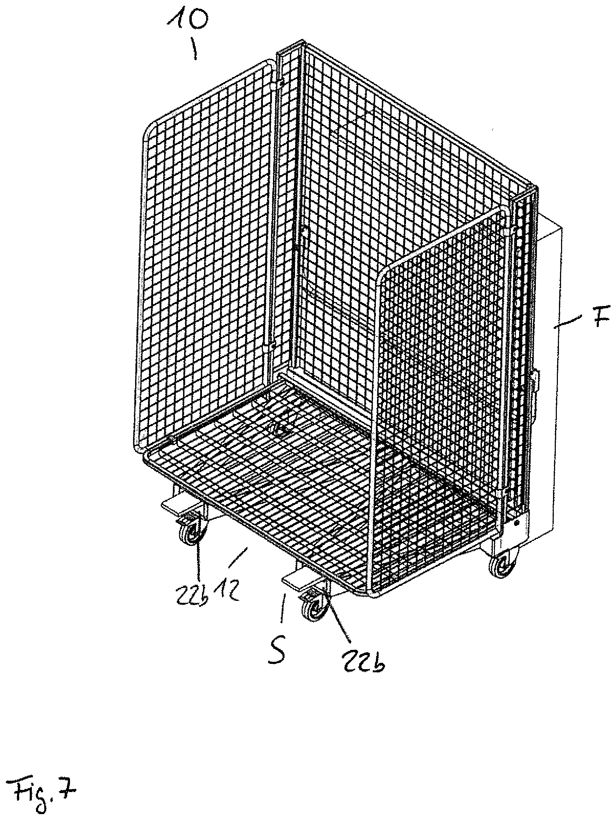

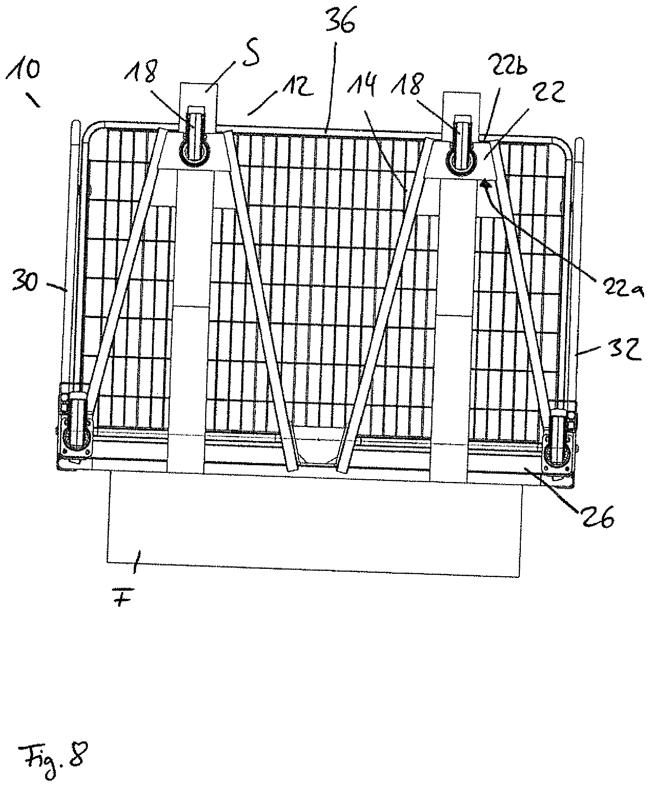

Die Öffnungen 22a und 22b dienen zur Aufnahme einer Staplergabel (vgl. **Fig. 7** bzw. **Fig. 8**).

Der Grundrahmen 14 weist weiter einen Querträger 26 auf.

Auf dem Querträger 26 sind eine Rückwand 28, zwei klappbare Seitenwände 30 und 32, zwei Distanzwände 34 und eine Containerboden 36 befestigt.

Die Rückwand 28 ist dabei identisch ausgerichtet wie auch der Querträger 26.

Die Rückwand 28 ist starr auf dem Querträger 26 aufragend montiert.

An der Rückwand 28 ist weiter ein klappbarer Schiebegriff 38 montiert, der in Fig. 1 im eingeklappten bzw. heruntergeklappten Zustand gezeigt ist.

Alternativ kann ein Zuggriff 38 Einsatz finden.

An den beiden Enden der Seiten 28 schließen zu beiden Seiten jeweils die Distanzwände 34 an. Jede Distanzwand 34 schließt mit der Rückwand 28 einen rechten Winkel ein.

Die Rückwand 28, die Distanzwand 34, die Seitenwände 32 und auch der Containerboden 36 sind jeweils als Gitterwände ausgebildet.

Jede dieser Gitterwände weist einen umlaufenden Rahmen sowie am Rahmen befestigte Gitter auf.

Wie dies weiter ersichtlich ist, sind an den Distanzwänden 34 die Seitenwände 30 bzw. 32 verschwenkbar angeordnet, und zwar derart, dass diese in Richtung auf die starre Rückwand 28 eingeklappt werden können. Die Seitenwand 30 und die Seitenwand 32 überlappen sich im eingeklappten Zustand, so dass diese einen Innenraum 40 bilden.

In diesem Innenraum 40 steht aufragend hochgeklappt im gezeigten zusammengeklappten Zustand des Transportcontainers der Transportboden 30. Der Containerboden 36 ist mit Klappscharnieren bzw. Klappgelenken verschwenkbar am Querträger 26 angelenkt.

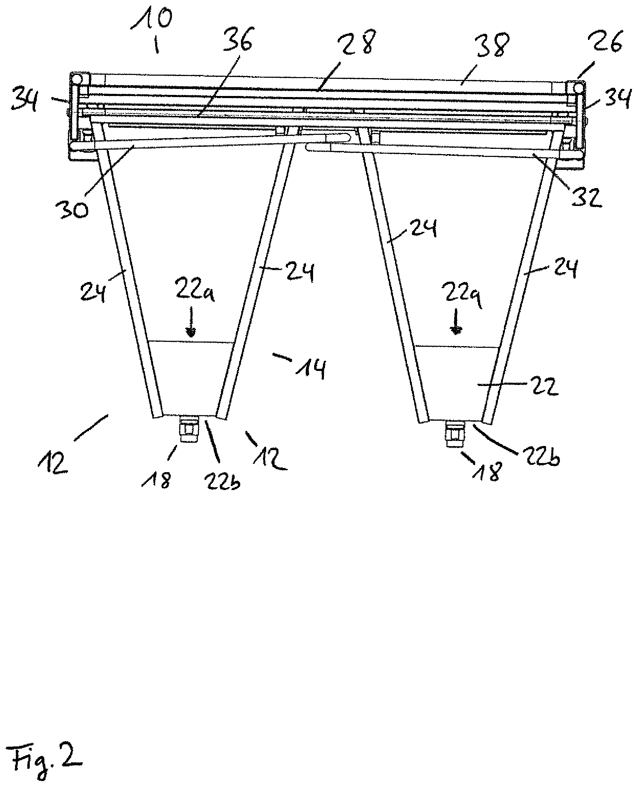

Wie dies weiter in Fig. 2 ersichtlich ist, sind im zusammengeklappten Zustand große Teile des Grundrahmens 14 frei und können in gleichartig ausgebildete weitere Transportcontainer unproblematisch eingeschoben werden. Durch dieses Ineinanderschieben wird eine Stapelung bzw. die Stapelbarkeit der Transportcontainer erreicht.

**Fig. 2** zeigt dabei den stapelbaren Transportcontainer 10 und das fahrbare Untergestell 12 in einer Draufsicht.

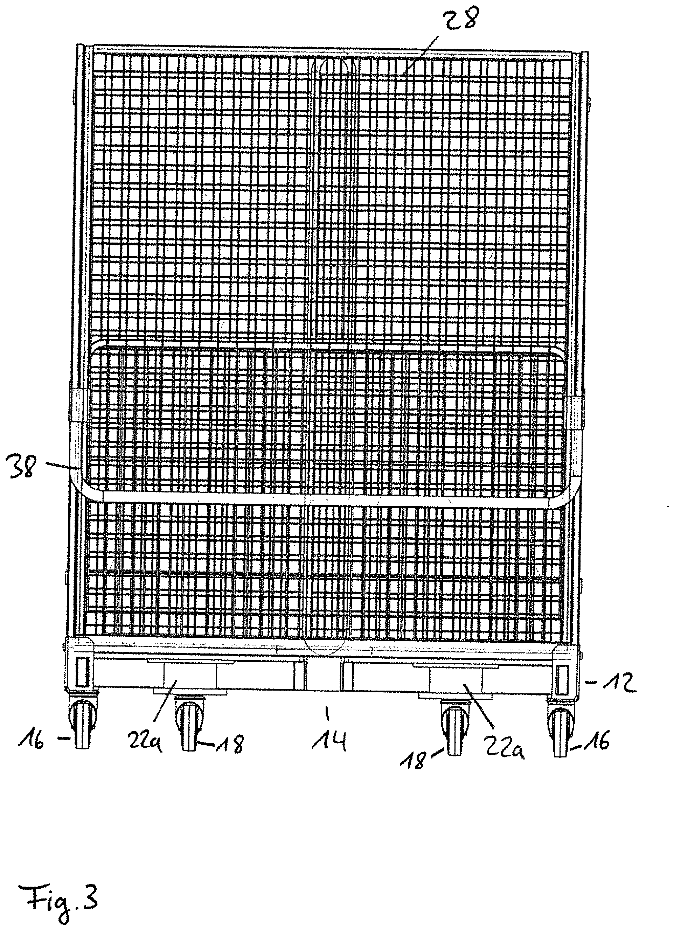

**Fig. 3** zeigt den zusammengeklappten Transportcontainer 10 in einer Rückansicht, d.h. mit Blick auf die Rückwand 28 auf der Seite, auf der der Schiebegriff 38 angeordnet ist.

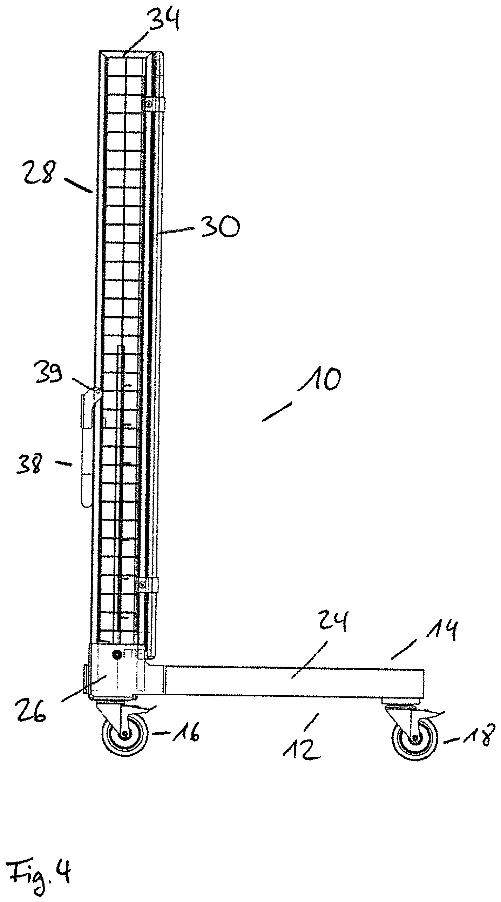

**Fig. 4** zeigt den Transportcontainer 10 in einer Seitenansicht.

Der Schiebegriff 38 kann um das Scharnier 39 entsprechend nach oben verschwenkt werden, wodurch eine Schiebemöglichkeit für den Nutzer des Transportcontainers 10 bereitgestellt wird.

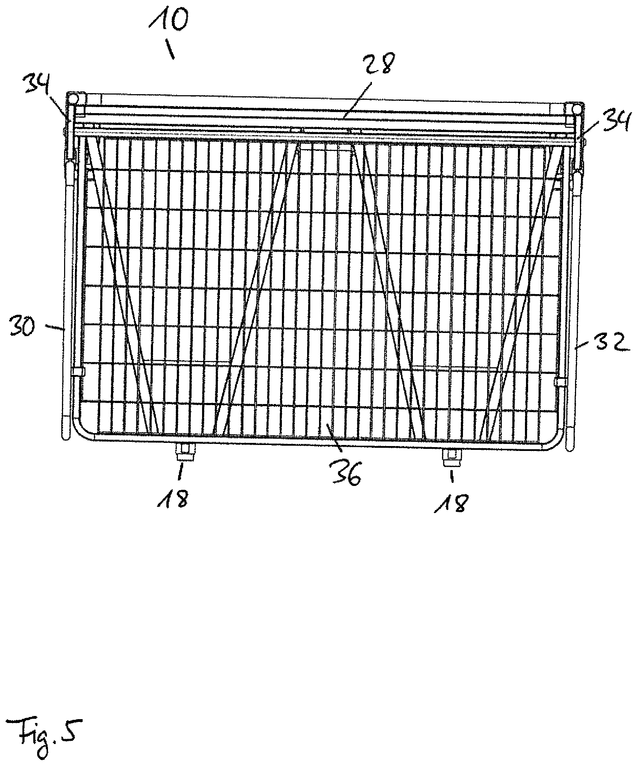

**Fig. 5** zeigt den aufgeklappten Transportcontainer 10 in einer Draufsicht.

Hieraus wird ersichtlich, dass im aufgeklappten Zustand die dem Grundgestell 14 und der Rückwand 28 abgewandte Kante der Seitenwand 30 bzw. 32 und auch die entsprechende Kante des Bodens 36 sich bis zur entsprechenden Vorderkante der Trapez-Elemente 22 erstreckt und dass die jeweiligen Vorderkanten insgesamt miteinander im Wesentlichen fluchten.

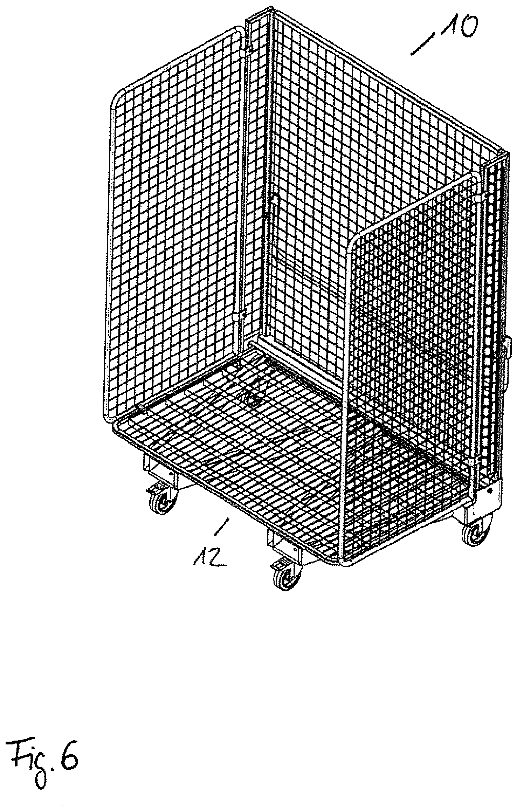

Wie dies weiter aus **Fig. 6** ersichtlich ist, wird durch den Containerboden 36 die Rückwand 28 und die Seitenwände 30 bzw. 32 ein Raum ausgebildet, in den Waren und zu transportierende Güter eingelegt werden können.

Wie weiter in Fig. 7 und Fig. 8 ersichtlich ist, kann über die Öffnungen 22a und 22b und geführt durch die Rohrelemente 24 eine Staplergabel S eines Flurförderfahrzeugs F hindurchgeführt werden.

Der stapelbare Transportcontainer 10 kann somit einfach auf die Staplergabel S aufgefädelt werden.

Hierdurch ergibt sich eine sichere und einfache Transportmöglichkeit für den Transportcontainer 10.

Die Gestaltung des W-förmigen Grundrahmens 14 mit dem W-förmigen Grundriss ermöglicht somit eine einfache Hilfe und Zentrierung für die Staplergabel S.

Es wird somit eine Durchstechmöglichkeit bzw. Durchfahrmöglichkeit der Gabelstaplergabel durch das Untergestell 12 ermöglicht. Folglich kommt es zu einer verbesserten Auflage auf der Staplergabel S.

Darüber hinaus kann beim Hochklappen des Containerbodens 36 der Bediener in den Container 10 laufen, da er sich in den Bereich zwischen den beiden Trapez-Elementen 22 hineinbewegen kann.

Es ist nicht mehr erforderlich, über das Untergestell 12 zu steigen bzw. drauf zusteigen.

Hierdurch kann die Arbeitssicherheit insgesamt verbessert werden.

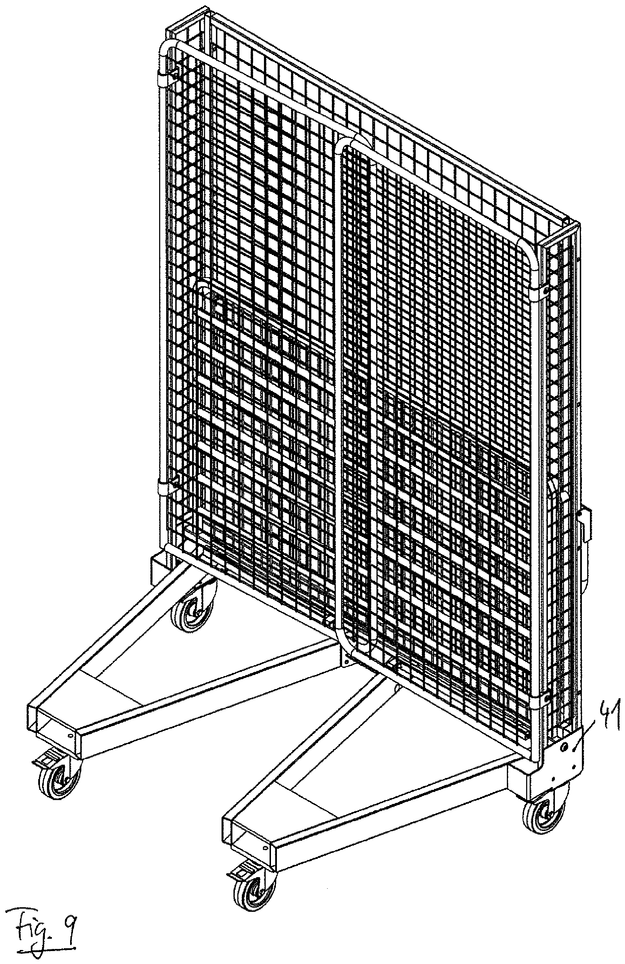

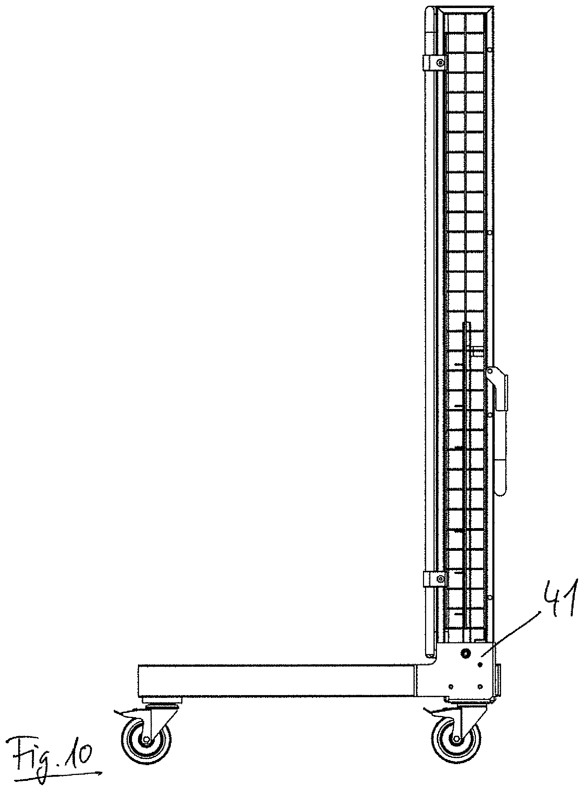

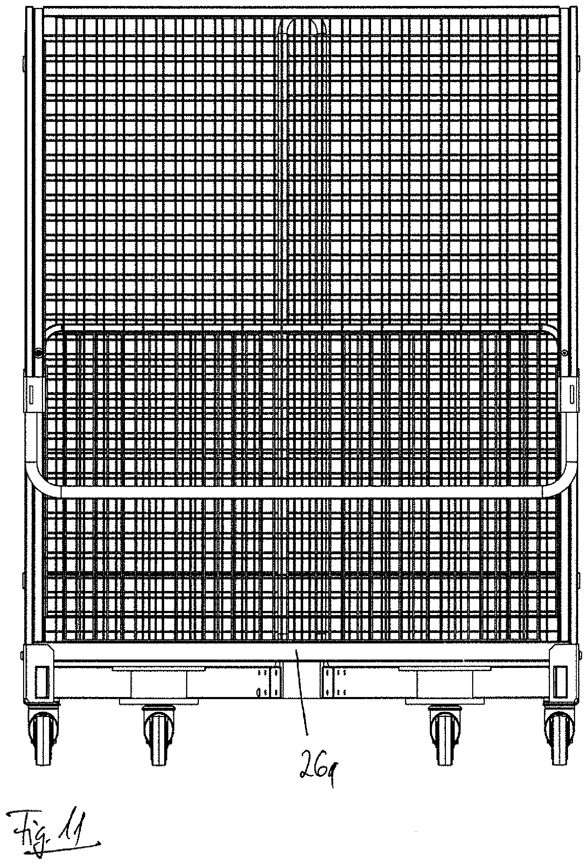

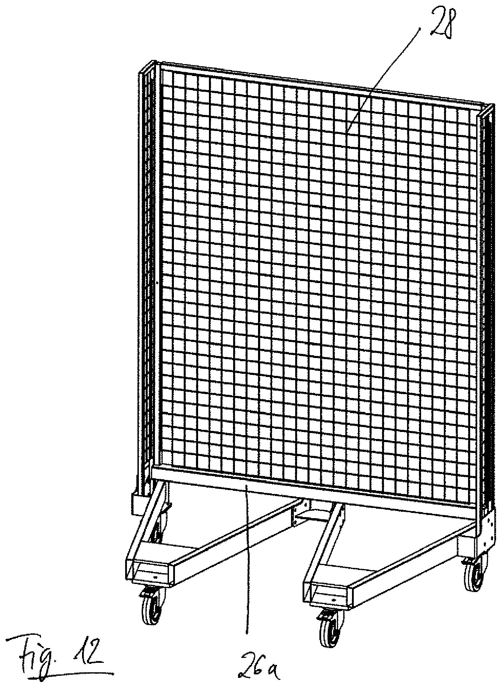

In einer weiterführenden Ausführungsform, gemäß der **Fig. 9-12** bildet der Querträger 26a einen Bestandteil der Rückenwand 28. Es hat sich in dieser Ausführungsform als sinnvoll erwiesen, dass zwei gleichförmige Befestigungsbleche 41 eingesetzt werden, die an dem der Containerboden 36 drehbar gelagert ist. Die Befestigungsbleche 41 sind gegenüberliegend und spiegelbildlich identisch ausgeführt.

Der Grundrahmen 14 endet in diesen Befestigungsblechen 41. Die Befestigungsbleche 41 nehmen auch die Distanzwände 34 auf.

Bei Nichtgebrauch, wie in **Fig. 9** dargestellt, umschließen die beiden Befestigungsbleche 41, die Rückwand 28, die Distanzwände 34, den hochgeklappten Containerboden 36 sowie die beiden klappbaren Seitenwände 30, 32.

### Bezugszeichen

- 10: stapelbarer Transportcontainer
- 12: Untergestell
- 14: Grundrahmen
- 16: Rollen
- 18: Rollen
- 20: Bremsen
- 22: Trapez-Elemente
- 22a: Öffnung
- 22b: Öffnung
- 24: Rohrelemente
- 26: Querträger
- 28: Rückwand
- 30: Seitenwand
- 32: Seitenwand
- 34: Distanzwände
- 36: Containerboden
- 38: Schiebegriff, Zuggriff
- 39: Scharnier
- 40: Innenraum
- 41: Befestigungsblech
- F: Flurförderfahrzeug
- S: Staplergabel

## Patentansprüche

1. Fahrbares Untergestell (12) für einen stapelbaren Transportcontainer (10) mit einem Grundrahmen (14) und mit am Grundrahmen (14) befestigten Rollen (16, 18), wobei der Grundrahmen (14) einen W-förmigen Grundriss aufweist, **dadurch gekennzeichnet, dass**
die W-Form des Grundrahmens (14) durch zwei Trapez-Elemente (22) im Bereich der beiden Verbindungspunkte der Schenkel der W-Form ausgebildet wird,
und dass die Trapez-Elemente (22) wenigstens eine Öffnung (22a, 22b) für eine Staplergabel (S) aufweisen.

2. Fahrbares Untergestell (12) nach Anspruch 1, **dadurch gekennzeichnet, dass** die Schenkel der W-Form des Grundrahmens (14) durch Rohrelemente (24), insbesondere Profilrohre wie Vierkantrohre (24) ausgebildet sind.

3. Fahrbares Untergestell (12) nach Anspruch 2, **dadurch gekennzeichnet, dass** die Rohrelemente (24) an den Trapez-Elementen (22), insbesondere an den Außenseiten der Trapez-Elemente (22), befestigt sind.

4. Fahrbares Untergestell (12) nach einem der Ansprüche 2 bis 3, **dadurch gekennzeichnet, dass** die Trapez-Elemente (22) zumindest teilweise kanalförmig ausgebildet sind.

5. Fahrbares Untergestell (12) nach einem der vorhergehenden Ansprüche, **dadurch gekennzeichnet, dass** der Grundrahmen (14) wenigstens einen Querträger (26) aufweist.

6. Fahrbares Untergestell (12) nach Anspruch 5 und nach einem der Ansprüche 2 bis 4, **dadurch gekennzeichnet, dass** der Querträger (26) auf der den Trapez-Elementen (22) entgegengesetzten Seite des Grundrahmens (14) angeordnet ist.

7. Fahrbares Untergestell (12) nach einem der vorhergehenden Ansprüche 5 oder 6, **dadurch gekennzeichnet, dass** der Querträger (26a) Bestandteil der Rückwand (28) ist.

8. Stapelbarer Transportcontainer (10) mit wenigstens einem fahrbaren Untergestell (12) nach einem der vorhergehenden Ansprüche.

9. Stapelbarer Transportcontainer (10) nach Anspruch 8, **dadurch gekennzeichnet, dass** das fahrbare Untergestell (12) ein Untergestell (12) gemäß einem der Ansprüche 5 oder 6 ist, wobei am Querträger (26) ein Containerboden (36) klappbar, insbesondere hochklappbar, befestigt ist.

10. Stapelbarer Transportcontainer (10) nach Anspruch 9, **dadurch gekennzeichnet, dass** am Querträger (26) eine starre Rückwand (28) befestigt ist.

11. Stapelbarer Transportcontainer (10) nach Anspruch 10, **dadurch gekennzeichnet, dass** die starre Rückwand (28) und der Querträger (26) identisch orientiert sind.

12. Stapelbarer Transportcontainer (10) nach einem der Ansprüche 10 oder 11, **dadurch gekennzeichnet, dass** an der Rückwand (28) ein Schiebegriff oder Zuggriff (38) angeordnet ist.

13. Stapelbarer Transportcontainer (10) nach Anspruch 12, **dadurch gekennzeichnet, dass** der Schiebegriff oder Zuggriff (38) klappbar ausbildet ist.

14. Stapelbarer Transportcontainer (10) nach einem der Ansprüche 8 bis 13, **dadurch gekennzeichnet, dass** wenigstens eine verschwenkbare Seitenwand (30, 32) an einer Distanzwand (34) angeordnet ist.

## Claims

1. Mobile lower frame (12) for a stackable transport container (10) with a base frame (14) and with rollers (16, 18) which are fastened to the base frame (14), the base frame (14) having a W-shaped outline, **characterized in that**
the W-shape of the base frame (14) is configured by way of two trapezoidal elements (22) in the region of the two connecting points of the limbs of the W-shape,
and **in that** the trapezoidal elements (22) have at least one opening (22a, 22b) for a stacker fork (S).

2. Mobile lower frame (12) according to Claim 1, **characterized in that** the limbs of the W-shape of the base frame (14) are configured by way of tubular elements (24), in particular profiled tubes such as square tubes (24) .

3. Mobile lower frame (12) according to Claim 2, **characterized in that** the tubular elements (24) are fastened to the trapezoidal elements (22), in particular to the outer sides of the trapezoidal elements (22).

4. Mobile lower frame (12) according to either of Claims 2 and 3, **characterized in that** the trapezoidal elements (22) are of at least partially channel-shaped configuration.

5. Mobile lower frame (12) according to one of the preceding claims, **characterized in that** the base frame (14) has at least one crossmember (26).

6. Mobile lower frame (12) according to Claim 5 and according to one of Claims 2 to 4, **characterized in that** the crossmember (26) is arranged on the opposite side of the base frame (14) opposite the trapezoidal elements (22).

7. Mobile lower frame (12) according to either of the preceding Claims 5 and 6, **characterized in that** the crossmember (26a) is a constituent part of the rear wall (28) .

8. Stackable transport container (10) with at least one mobile lower frame (12) according to one of the preceding claims.

9. Stackable transport container (10) according to Claim 8, **characterized in that** the mobile lower frame (12) is a lower frame (12) according to either of Claims 5 and 6, a container floor (36) being fastened to the crossmember (26) such that it can be folded, in particular such that it can be folded up.

10. Stackable transport container (10) according to Claim 9, **characterized in that** a rigid rear wall (28) is fastened to the crossmember (26).

11. Stackable transport container (10) according to Claim 10, **characterized in that** the rigid rear wall (28) and the crossmember (26) are oriented identically.

12. Stackable transport container (10) according to either of Claims 10 and 11, **characterized in that** a push handle or pull handle (38) is arranged on the rear wall (28).

13. Stackable transport container (10) according to Claim 12, **characterized in that** the push handle or pull handle (38) is of foldable configuration.

14. Stackable transport container (10) according to one of Claims 8 to 13, **characterized in that** at least one pivotable side wall (30, 32) is arranged on a spacer wall (34) .

## Revendications

1. Châssis mobile (12) destiné à un conteneur de transport empilable (10), ledit châssis comportant un cadre de base (14) et des roulettes (16, 18) fixées au cadre de base (14), le cadre de base (14) ayant une forme de W en projection, **caractérisé en ce que**
la forme de W du cadre de base (14) est formée par deux éléments trapézoïdaux (22) dans la zone des deux points de liaison des branches de la forme de W,
et les éléments trapézoïdaux (22) comportent au moins une ouverture (22a, 22b) destinée à une fourche de chariot élévateur (S).

2. Châssis mobile (12) selon la revendication 1, **caractérisé en ce que** les branches de la forme de W du cadre de base (14) sont formées par des éléments tubulaires (24), notamment des tubes profilés tels que des tubes carrés (24).

3. Châssis mobile (12) selon la revendication 2, **caractérisé en ce que** les éléments tubulaires (24) sont fixés aux éléments trapézoïdaux (22), notamment aux côtés extérieurs des éléments trapézoïdaux (22).

4. Châssis mobile (12) selon l'une des revendications 2 à 3, **caractérisé en ce que** les éléments trapézoïdaux (22) sont au moins partiellement conçus en forme de conduit.

5. Châssis mobile (12) selon l'une des revendications précédentes, **caractérisé en ce que** le cadre de base (14) comporte au moins une traverse (26).

6. Châssis mobile (12) selon la revendication 5 et selon l'une des revendications 2 à 4, **caractérisé en ce que** la traverse (26) est disposée du côté du cadre de base (14) qui est opposé aux éléments trapézoïdaux (22) .

7. Châssis mobile (12) selon l'une des revendications précédentes 5 ou 6, **caractérisé en ce que** la traverse (26a) fait partie de la paroi arrière (28).

8. Conteneur de transport empilable (10) comprenant au moins un châssis mobile (12) selon l'une des revendications précédentes.

9. Conteneur de transport empilable (10) selon la revendication 8, **caractérisé en ce que** le châssis mobile (12) est un châssis (12) selon l'une des revendications 5 ou 6, un fond de conteneur (36) étant fixé à la traverse (26) de manière rabattable, notamment rabattable verticalement.

10. Conteneur de transport empilable (10) selon la revendication 9, **caractérisé en ce qu'**une paroi arrière rigide (28) est fixée à la traverse (26).

11. Conteneur de transport empilable (10) selon la revendication 10, **caractérisé en ce que** la paroi arrière rigide (28) et la traverse (26) sont orientées de manière identique.

12. Conteneur de transport empilable (10) selon l'une des revendications 10 ou 11, **caractérisé en ce qu'**une poignée de poussée ou de traction (38) est disposée sur la paroi arrière (28).

13. Conteneur de transport empilable (10) selon la revendication 12, **caractérisé en ce que** la poignée de poussée ou de traction (38) est conçue pour être rabattable.

14. Conteneur de transport empilable (10) selon l'une des revendications 8 à 13, **caractérisé en ce qu'**au moins une paroi latérale pivotante (30, 32) est disposée au niveau d'une paroi d'espacement (34).
